# EUROPEAN PATENT APPLICATION

(11) **EP 4 841 448 A1**
(43) Date of publication of application: **18.11.2026**
(21) Application number: 25878431.3
(22) Date of filing: 12.03.2025
(51) Int. Cl.: G06F 11/22

(54) **CONFLICT HANDLING METHOD AND APPARATUS FOR LOGIC BUILT-IN SELF-TEST, AND ELECTRONIC DEVICE, MEDIUM AND PROGRAM PRODUCT**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN); VeriSilicon Technology (Shanghai) Co., Ltd., Shanghai 201306 (CN)
(72) Inventor: The designation of the inventor has not yet been filed
(74) Representative: Canzler & Bergmeier Patentanwälte Partnerschaft mbB
(86) International application number: PCT/CN2025/082225
(87) International publication number: WO 2026/188459

(57) **Abstract**

The present disclosure provides a conflict handling method, an apparatus, an electronic device, a medium and a computer program product for logic built-in self-test. The method includes: obtaining a check result of a test frame to perform a logic built-in self-test; when the logic built-in self-test is performed, determining a processing flow of the test frame and a data frame based on a process handling instruction; and detecting whether a conflict occurs between the test frame and the data frame based on a conflict handling instruction, and performing conflict handling when a conflict arises between the test frame and the data frame. The present disclosure can be applied to various complex data path modules, avoid conflicts between data frames and test frames during the execution of the logic built-in self-test, and give priority to ensuring the real-time processing and data integrity of data frames.

## Description

### FIELD OF TECHNOLOGY

The present disclosure relates generally to the field of chip technology, and more particularly to a conflict handling method, an apparatus, an electronic device, a medium and a computer program product for logic built-in self-test.

### BACKGROUND

Logic Built-in self-test (LBIST) is an important design-for-testability (DFT) technology. With the continuous improvement of the complexity of integrated circuits and the increase of chip integration, traditional external test methods have gradually become inadequate to meet the testing requirements of modern integrated circuits. Against this background, LBIST has emerged and is typically executed during a power-on startup period and an operational period of a chip to detect internal faults. Specifically, an LBIST circuit generally comprises a stimulus controller module configured to control a stimulus generator module to input test vectors into a circuit under test, and a response analysis module configured to analyze output responses to determine whether a fault occurs in the circuit. However, during execution of LBIST, due to relatively long delays existing in data paths of a chip, conflicts are prone to occur between LBIST test frames and data frames, which may adversely affect timeliness and integrity of data processing. Therefore, a need exists for a method to avoid and handle conflicts between data frames and test frames in LBIST.

### SUMMARY

The present disclosure provides a conflict handling method, an apparatus, an electronic device, a medium and a computer program product for logic built-in self-test.

In a first aspect, the present disclosure provides a conflict handling method for logic built-in self-test. The method comprises: obtaining check results of test frames to perform a logic built-in self-test; wherein when the logic built-in self-test is performed, determining a processing flow of the test frames and data frames based on a process handling instruction; detecting whether a conflict occurs between a current test frame and a current data frame based on a conflict handling instruction, and performing conflict handling when a conflict occurs between the current test frame and the current data frame.

In one implementation of the first aspect, when the logic built-in self-test is performed in an on-line mode, the conflict handling instruction comprises: detecting whether a signal of the current test frame and a signal of the current data frame are both valid; when the signal of the current test frame and the signal of the current data frame are both valid, determining that a conflict occurs between the current test frame and the current data frame, and generating a frame conflict signal; when the signal of the current test frame and the signal of the current data frame are not both valid, determining that no conflict occurs between the current test frame and the current data frame, and continuing to determine the processing flow of the test frames and the data frames based on the process handling instruction.

In one implementation of the first aspect, the conflict handling instruction comprises: receiving the frame conflict signal to invalidate the check result of the current test frame and reporting a current pass count value; wherein the pass count value is a count value of the test frames that have passed the check.

In one implementation of the first aspect, when the frame conflict signal is generated in an on-line power-on test state, the logic built-in self-test is terminated.

In one implementation of the first aspect, when the frame conflict signal is generated in an on-line working state, triggering a frame conflict interrupt signal; suspending the logic built-in self-test in response to the frame conflict interrupt signal and acquiring a next data frame for processing; and inserting a next test frame in a vertical blanking period after completion of processing of the next data frame to obtain a corresponding check result, and determining whether the frame conflict signal is generated.

In one implementation of the first aspect, when the logic built-in self-test is performed in an on-line mode or an off-line mode, the process handling instruction comprises: determining whether a self-test end signal is generated based on the check results of the test frames; wherein when the self-test end signal is generated, terminating the logic built-in self-test and acquiring the data frames for data processing; and wherein when the self-test end signal is not generated, continuing to obtain check results of additional test frames to perform the logic built-in self-test.

In one implementation of the first aspect, judging whether the self-test end signal is generated based on the check result of the test frame comprises: obtaining a pass count value, wherein the pass count value is a count value of the test frames that have passed the check; determining whether the pass count value satisfies a threshold condition; when the pass count value satisfies the threshold condition, generating the self-test end signal; wherein when the pass count value does not satisfy the threshold condition, not generating the self-test end signal, and continuing to obtain the check results of the additional test frames until the pass count value satisfies the threshold condition.

In one implementation of the first aspect, when the self-test end signal is not generated in an on-line working state or an off-line working state, triggering a self-test interrupt signal; suspending the logic built-in self-test in response to the self-test interrupt signal and acquiring a next data frame for processing; inserting a next test frame in a vertical blanking period after completion of processing of the next data frame to obtain a corresponding check result.

In one implementation of the first aspect, when the self-test end signal is not generated in an on-line power-on test state or an off-line power-on test state, directly acquiring a next test frame to obtain a corresponding check result.

In one implementation of the first aspect, the method comprises: when a check result of the current test frame is passed, incrementing the pass count value by one; if the current test frame fails check, generating a check error signal; stopping the logic built-in self-test and data processing of the current data frame in response to the check error signal.

In one implementation of the first aspect, obtaining the check results of the test frames comprises: verifying each of the test frames by using a CRC-32 generating polynomial 0x04C11DB7 to obtain a check value; comparing the check value with a pre-stored check reference value to obtain the check result.

In one implementation of the first aspect, obtaining the check results of the test frames comprises:
when the check value is identical to the check reference value, obtained check result is passed; and
when the check value is different from the check reference value, the obtained check result is failed.

In a second aspect, the present disclosure provides a conflict handling apparatus for logic built-in self-test. The apparatus comprises:
a test check module configured to obtain check results of test frames to perform a logic built-in self-test; a process handling module configured to determine a processing flow of the test frames and data frames based on a process handling instruction when the logic built-in self-test is performed; a conflict handling module configured to detect whether a conflict occurs between a current test frame and a current data frame based on a conflict handling instruction, and perform conflict handling when a conflict arises between the current test frame and the current data frame.

In a third aspect, the present disclosure provides an electronic device, comprising a memory and a processor; the memory is configured to store a computer program; the processor is configured to execute the computer program stored in the memory, so as to cause the electronic device to perform the conflict handling method for logic built-in self-test.

In a fourth aspect, the present disclosure provides a computer - readable storage medium having a computer program stored thereon. When the program is executed by an electronic device, the conflict handling method for logic built-in self-test is implemented.

In a fifth aspect, the present disclosure provides a computer program product comprising computer program code. When the computer program code is executed on a computer, the computer is enabled to implement the conflict handling method for logic built-in self-test.

As described above, the conflict handling method, apparatus, electronic device, medium and computer program product for logic built-in self-test of the present disclosure provide the following advantages:

The present disclosure is applicable to a plurality of complex data path modules, and, by means of a process handling instruction, is capable of determining processing flows of data frames and test frames during execution of logic built-in self-test, thereby avoiding conflicts between the data frames and the test frames. Moreover, when the logic built-in self-test is executed on-line, whether a conflict occurs between a current data frame and a current test frame is detected in real time. If a conflict occurs between the current data frame and the current test frame, the present disclosure, by means of a conflict handling instruction, ensures a processing priority of the current data frame, invalidates a check result of the current test frame, and gives priority to ensuring real-time processing and data integrity of the current data frame.

### BRIEF DESCRIPTION OF THE DRAWINGS

FIG.1 is a schematic diagram showing an application of conflict handling for logic built-in self-test according to an embodiment of the present disclosure.
FIG.2 is a schematic flowchart showing a conflict handling method for logic built-in self-test according to an embodiment of the present disclosure.
FIG.3 is a schematic flowchart showing execution of the logic built-in self-test by an ISP chip in an off-line power-on test state according to an embodiment of the present disclosure.
FIG.4 is a schematic flowchart showing execution of the logic built-in self-test by an ISP chip in an on-line power-on test state according to an embodiment of the present disclosure.
FIG.5 is a schematic flowchart showing execution of the logic built-in self-test by an ISP chip in an off-line working state according to an embodiment of the present disclosure.
FIG.6 is a schematic flowchart showing execution of the logic built-in self-test by an ISP chip in an on-line working state according to an embodiment of the present disclosure.
FIG.7 is a schematic structural diagram showing a conflict handling apparatus for logic built-in self-test according to an embodiment of the present disclosure.
FIG.8 is a schematic structural diagram showing an electronic device according to an embodiment of the present disclosure.

### DETAILED DESCRIPTION

The embodiments of the present disclosure will be described below. Those skilled in the art can easily understand advantages and effects of the present disclosure according to contents disclosed by the specification. The present disclosure can also be implemented or applied through other different specific embodiments. Various details in this specification can also be modified or changed based on different viewpoints and disclosures without departing from the spirit of the present disclosure. It should be noted that the following embodiments and the features of the following embodiments can be combined with each other if no conflict will result.

It should be noted that the drawings provided in this disclosure only illustrate the basic concept of the present disclosure in a schematic way, so the drawings only show the components closely related to the present disclosure. The drawings are not necessarily drawn according to the number, shape and size of the components in actual implementation; during the actual implementation, the type, quantity and proportion of each component can be changed as needed, and the layout of the components can also be more complicated.

In addition, terms like "first" and "second" are used for descriptive purpose only, and are not to be construed as indicating or implying relative importance or implicitly specifying numbers of technical features indicated. Thus, features qualified with terms like "first" and "second" may explicitly or implicitly comprise at least one such feature. Moreover, the technical solutions of various embodiments can be combined, provided they are feasible for someone with ordinary skills in this field. However, if the combination of technical solutions leads to contradictions or is unachievable, it should be understood that such a combination doesn't exist and is not within the scope of this disclosure.

Before further explaining the present application, the terms and terminology involved in the embodiments of the present application are explained as follows:

BIST: Built-In Self-Test, which is a test technology widely used in integrated circuits or electronic systems. At the chip circuit design stage, designers can generate test stimulus signals by integrating additional test circuits inside the circuit, and can detect responses of the circuit to such stimulus. At present, there are mainly Logic Built-In Self-Test (LBIST) and Memory Built-In Self-Test (MBIST).

V-blank: Vertical Blanking Period, which refers to a time interval during which an electron beam scans back from the lower right corner of a screen to the upper left corner during scanning of one frame of an image. It is a concept inherited from traditional video systems based on cathode ray tube (CRT) displays and similar video signal processing logic. During this period, normal image data processing is in a relatively idle state. A complete image frame comprises an effective pixel area of a display content portion and a V-blank portion.

CRC: Cyclic Redundancy Check, which is an error detection technology based on polynomial division operations, and is used to detect whether errors occur during data transmission or storage.

Hamming Code, which is an error detection and correction coding technology. By adding redundant bits (check bits) to data, single-bit errors can be detected and corrected during transmission or storage, and multi-bit errors can also be detected.

LRC: Longitudinal Redundancy Check, which is a simple error detection method that calculates a check code by accumulating data byte by byte and performing modulo operations, and is often used in communication protocols to detect odd numbers of errors in data transmission.

BCH Code: Bose-Chaudhuri-Hocquenghem Code, which is a multi-error correction code based on finite field algebra, and is widely used in data storage and communication fields to detect and correct multiple errors and to improve system reliability and data integrity.

ISP: Image Signal Processor, which is a chip or processing unit specially used for processing digital image signals.

ASIL: Automotive Safety Integrity Level, which is a classification method defined by ISO 26262 for functional safety requirements of automotive electronic and electrical systems, and is used to measure severity of harm to personnel, vehicles, and surrounding environments caused by failures of systems or functions. ASIL is divided into four levels, namely ASIL A, ASIL B, ASIL C, and ASIL D, among which ASIL D represents the highest safety requirement, indicating that failures of corresponding system functions may cause the most serious harm, while ASIL A represents a level with relatively minor harm.

Online mode: which refers to a mode in which the ISP performs processing operations synchronously during real-time input of image data. In this mode, real-time data and timing control signals generated by an image sensor are continuously transmitted to the ISP for processing in units of lines. The ISP immediately applies a series of image processing algorithms, such as color correction, noise reduction, and sharpening, to incoming data streams. Processed image data can be output in near real time or further used for subsequent display, storage, or transmission operations. The whole process is coherent and synchronized with data input, without obvious data waiting or pause intervals, so as to meet application scenarios with high real-time requirements, such as real-time monitoring, assisted driving, and video communication.

Offline mode: which refers to a mode in which images to be processed are first stored in system memory in units of frames. When processing is required, control logic reads data from the memory through DMA, adds timing control signals simulating behaviors of an image sensor, and then sends the data to the ISP for processing. In this mode, image data is not obtained in real time, but pre-stored image data is read from a storage medium, and the ISP processes the images according to predetermined image processing flows. This mode allows complex and potentially time-consuming processing operations, since real-time constraints are not required.

DDR: Double Data Rate Synchronous Dynamic Random Access Memory, which has higher operating efficiency than conventional memory.

IEEE: Institute of Electrical and Electronics Engineers, which is an international association of engineers in electronic technology and information science.

DMA: DMA: Direct Memory Access, which allows certain hardware subsystems (such as disk drives, sound cards, and network cards) to read and write data directly from main memory without CPU intervention.

CPU: Central Processing Unit, which serves as an operation and control core of a computer system and is a final execution unit for information processing and program execution.

MIPI: MIPI: Mobile Industry Processor Interface, which is an open standard interface specification mainly used for interconnection between internal components of mobile devices such as smartphones and tablet computers.

CSI: Camera Serial Interface, which is a serial data transmission interface standard defined by the MIPI Alliance for connecting cameras and image processors.

At present, the number of electronic devices and chips in passenger vehicles is rapidly increasing. These complex chips undertake core functions such as assisted driving, communication and positioning, and multi-sensor data processing in vehicles. Automotive-grade chips, such as in-vehicle image signal processors, undertake critical tasks of real-time image processing for images collected by various cameras. However, automotive-grade chips may suffer from functional errors or damage due to potential factors such as manufacturing defects, electromagnetic radiation, environmental hazards including high temperature and humidity, and aging effects, thereby affecting normal operation of the chips. Therefore, in order to ensure safe operation of vehicle-related functions under both normal and fault conditions, the international standard ISO 26262 - Functional Safety of Road Vehicles specifies a series of functional safety requirements and processes throughout a full life cycle including system design, development, check, production, and operation and maintenance, so as to reduce risks caused by failures of electronic and electrical systems. One approach to improving reliability of automotive electronic devices is to perform periodic self-tests to detect reliability issues caused by silicon defects and aging.

Accordingly, to ensure accuracy of image data processing of automotive-grade chips and reliability of entire systems, efficient and low-cost LBIST solutions are required, aiming to complete self-tests rapidly while ensuring relatively high fault coverage. In this process, logic built-in self-test is mainly carried out during idle periods of data frame processing, including power-on test states after chip power-up and reset, as well as test periods during V-blank intervals in working states. However, since each functional module in an internal pipeline of an automotive image signal processor requires different processing times to execute corresponding algorithms on each line of image data, a line of data cannot be immediately transmitted to subsequent modules during operation. Image data flows through processing modules of the ISP pipeline in line order, starting from processing a first line at an input end until the line is completely output from an output end. During this process, delays continuously accumulate during line-by-line processing, buffering, and transmission, resulting in several-line line delays between actual input and output.

Therefore, for automotive-grade ISP chips with strict real-time requirements, if BIST frame stimulus data is applied from an ISP input end until test results are output from an ISP output end, an actual testing duration of test frames becomes excessively long. This leads to a problem that test frames are prone to conflict with data frames during execution of logic built-in self-test, that is, data frames encounter test frames that are still being transmitted in ISP pipeline modules.

In order to solve at least the above technical problems, the present disclosure provides a conflict handling method, apparatus, electronic device, medium, and computer program product for logic built-in self-test, which can avoid conflicts between data frames and test frames during execution of logic built-in self-test, and preferentially ensure real-time processing and data integrity of the data frames.

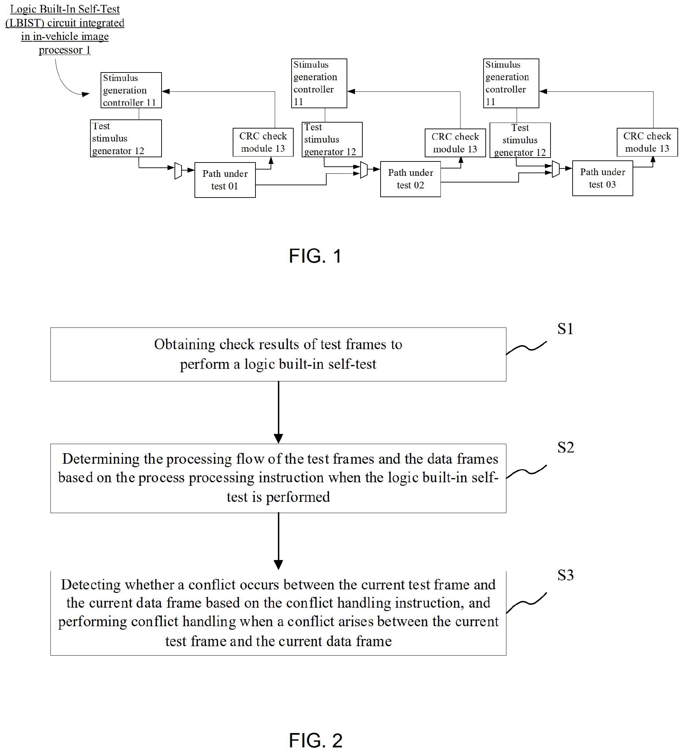

FIG.1 is a schematic diagram showing an application of conflict handling for logic built-in self-test according to an embodiment of the present disclosure. The conflict handling method for logic built-in self-test provided by the present disclosure can be applied to an in-vehicle image processor 1 shown in FIG.1. As shown in FIG.1, a logic built-in self-test circuit is integrated in the in-vehicle image processor 1, which specifically comprises a stimulus generation controller 11, a test stimulus generator 12 and a CRC check module 13. The logic built-in self-test circuit protects the key pipeline paths of the pipeline of the in-vehicle image processor 1. As data frames traverse a long path from input to output through the pipeline of the in-vehicle image processor 1, a relatively long path delay corresponding to several line delays is introduced. During on-chip logic built-in self-test, this delay can easily lead to frame data conflicts between test frames and data frames. To reduce the probability of such conflicts, the pipeline of the in-vehicle image processor 1 is divided into three sections of LBIST protection paths, so that the logic built-in self-test can be performed in parallel on each section of the pipeline paths (paths under test 01-03), thereby reducing the impact of pipeline delay on the test frames.

Specifically, the stimulus generation controller 11 is responsible for coordinating the process of the logic built-in self-test. The stimulus generation controller 11 determines the processing flow of the test frames and the data frames based on the process handling instruction, monitors the state of the logic built-in self-test, and triggers an interrupt when necessary. During the logic built-in self-test, according to the configured resolution and parameters of the test frames, the test stimulus generator 12 generates test frame data, and switches the input data of the module under test on the ISP pipeline to the test frame data through the chip select signal of the data selector. When the test frame data is inserted to perform a logic built-in self-test, the CRC check module 13 performs checking on the test frames.

For the CRC check module 13, as a preferred embodiment, a CRC-32 generating polynomial 0x04C11DB7 is selected to check on each of the test frames. The generating polynomial 0x04C11DB7 is adopted by the IEEE 802.3 standard because it has been proved to provide good error detection performance. Since the CRC check module 13 adopts a 32-bit linear feedback shift register in the hardware calculation process, under triggering of a clock signal, the data in the register will perform a shift operation, and other bits of the shift register will perform XOR operations at positions corresponding to the generating polynomial, thereby generating new bit values. This feedback mechanism ensures that each bit of the input data can affect a CRC value, and through multiple iterations, the CRC value fully reflects characteristics of the entire input data. Therefore, data conflicts between test frames and data frames will eventually cause inconsistency between a CRC result calculated by hardware and a CRC reference value. At this time, in order to prevent check results of the conflicts between the test frames and the data frames from affecting processing of real data frames, based on conflict handling instructions, a CRC check result of a current test frame is invalidated, so that a crc_error check signal is not reported to an error collection module, while a current pass count value is reported, and a frame conflict signal is triggered. If no data conflict occurs, when the last module of each section of a BIST data path completes processing of a BIST test frame, the CRC check module 13 compares a calculated CRC value of an entire test frame with a pre-stored CRC reference value. If comparison results are different, a 1-bit check error signal is generated, and, in response to the check error signal, logic built-in self-test and data processing of data frames are stopped.

Technical solutions of the present disclosure are described in detail below with reference to the accompanying drawings.

FIG.2 shows a schematic flowchart of the conflict handling method for logic built-in self-test provided by the present disclosure. As shown in FIG.2, the conflict handling method for logic built-in self-test comprises steps S1 to S3.

S1: Obtaining check results of test frames to perform a logic built-in self-test;

Specifically, the test frames are input into the chip or system to obtain the check results of the test frames, so as to perform the logic built-in self-test. In some embodiments, when performing the logic built-in self-test on the ISP, due to the existence of several lines of delay between the input and output of the data frames in the ISP pipeline, in order to reduce the probability of data conflict between the test frames and the data frames when performing the logic built-in self-test, the ISP pipeline can be selectively divided into multiple sections of LBIST data paths, for example, the ISP pipeline is divided into three sections of LBIST data paths, so that the logic built-in self-test can be performed in parallel on each section of the pipeline paths, thereby improving the self-test efficiency.

In some embodiments, the check results of the test frames can be obtained by using the CRC check method, which specifically comprises: verifying a current test frame by using a CRC-32 generating polynomial 0x04C11DB7 to obtain a check value of the current test frame; and comparing the check value with a pre-stored check reference value to obtain a check result of the current test frame. In some embodiments, for each section of the LBIST data path, the CRC-32 generating polynomial 0x04C11DB7 is adopted, which represents the polynomial x³² + x²⁶ + x²³ + x²² + x¹⁶ + x¹² + x¹¹ + x¹⁰ + x⁸ + x⁷ + x⁵ + x⁴ + x² + x + 1. The current test frame is verified using the polynomial to obtain a check value, and the check value is compared with a pre-stored check reference value to obtain the check result of the current test frame.

Specifically, when the check value of the current test frame is different from the check reference value, the obtained check result of the current test frame is a check failure; otherwise, the obtained check result of the current test frame is a check pass. In some embodiments, when each section of the LBIST data path completes processing of the current test frame, a calculated CRC value of the entire current test frame is compared with the check reference value. If the values are different, the check result is determined as a check failure.

Further, when the check result of the current test frame is a check pass, a pass count value is increased by one. When the check result of the current test frame is a check failure, a check error signal is generated, and in response to the check error signal, logic built-in self-test and data-frame processing are stopped, that is, an interrupt of the entire chip system is triggered.

The pass count value represents a count of test frames that have passed the check. That is, each time the check result of the current test frame is passed, the pass count value is increased by one, so as to determine a specific number of test frames that have passed the check.

It should be noted that other CRC generating polynomials may also be used to obtain check results of the test frames, or other checking methods such as Hamming code checking, LRC checking, and BCH code checking may be adopted, which are not limited by the present disclosure.

S2: Determining the processing flow of the test frames and the data frames based on the process handling instruction when the logic built-in self-test is performed.

In order to avoid conflicts between data frames and test frames during the execution of the logic built-in self-test, it is necessary to determine the processing flow of test frames and data frames based on process handling instructions. In other words, in practice, the priority of data frames is ensured through the processing flow, so as to avoid conflicts between data frames and test frames.

Specifically, when the logic built-in self-test is performed in the on-line mode or the off-line mode, the process handling instruction comprises: determining whether a self-test end signal is generated based on the check result of the current test frame; when the self-test end signal is generated, terminating the logic built-in self-test and acquiring the data frames; when the self-test end signal is not generated, continuing to obtain check results of additional test frames to perform the logic built-in self-test. That is, during the execution of the logic built-in self-test, whether to terminate logic built-in self-test is determined according to the self-test end signal. When the self-test end signal is triggered, the system will automatically end the logic built-in self-test and acquire subsequent data frames to continue data processing. When the self-test end signal is not triggered, it means that the test needs to be continued, that is, testing continues by obtaining check results of further test frames.

In some embodiments, determining whether the self-test end signal is generated based on the check result of the test frame comprises: obtaining a pass count value, where the pass count value is the count value of the test frames that have passed the check; determining whether the pass count value satisfies a threshold condition; when the pass count value satisfies the threshold condition, generating the self-test end signal; when the pass count value does not satisfy the threshold condition, not generating the self-test end signal, and continuing to obtain the check results of the additional test frames until the pass count value satisfies the threshold condition. That is, the present disclosure enables a threshold judgment logic to determine whether the logic built-in self-test should be ended. When the specific number of test frames that have passed the check reaches the threshold, a self-test end signal is generated; when the threshold is not reached, the check results of the test frames are continuously obtained until the pass count value satisfies the threshold condition.

In some embodiments, when the logic built-in self-test is performed on the chip, the chip may be in a power-on test state or a working state. Therefore, when the self-test end signal is not generated, the process of continuing to obtain the check results of the test frames may be different due to the state of the chip, that is, the processing flow of the test frame sand the data frames may be different due to the state of the chip.

When the chip is in the power-on test state and the self-test end signal is not generated, a next test frame is directly obtained to obtain the corresponding check result. That is, when the pass count value does not satisfy the threshold condition, the chip does not process any data frames, but directly obtains the next test frame and obtains the corresponding check result. That is to say, during the entire power-on test period, all test frames are actually executed based on the process handling instruction, and the self-test end signal is generated only when the pass count value of the check results of the test frames satisfies the threshold condition. At this time, in response to the self-test end signal, the logic built-in self-test is terminated, and the chip enters the working state to obtain subsequent data frames for continuous data processing.

When the chip is in the working state and the self-test end signal is not generated, a self-test interrupt signal is triggered. In response to the self-test interrupt signal, the logic built-in self-test is suspended, and the next data frame is obtained for processing; a next test frame is inserted in a vertical blanking period after completion of processing of the next data frame to obtain a corresponding check result. That is, when the chip is in the working state, data frames are obtained and processed in real time. Therefore, when logic built-in self-test is carried out in the working state, each current test frame is inserted during the V-blank period after processing of the current data frame. After testing a BIST frame , if the pass count value does not satisfy the threshold condition, that is, the self-test end signal is not generated, a self-test interrupt signal is triggered, and in response to the self-test interrupt signal, the chip obtains a next data frame, and then inserts a next test frame in the vertical blanking period after the processing of the next data frame to continue checking.

Therefore, through the above process handling instruction, the chip can determine processing flows regardless of whether it is in the power-on test state or the working state in an orderly manner, thereby avoiding conflicts between data frames and test frames.

S3: Detecting whether a conflict occurs between the current test frame and the current data frame based on the conflict handling instruction, and performing conflict handling when a conflict arises between the current test frame and the current data frame.

In some embodiments, depending on different access modes of image data, the ISP operates in an on-line mode or an off-line mode. In the on-line mode, real-time data and timing control signals generated by the image sensor are directly sent to the ISP for real-time processing in units of lines, generally via parallel or highspeed serial interfaces such as MIPI CSI. In the off-line mode, images to be processed are stored in a system memory, such as DDR, in units of frames. When off-line processing is required, a control logic reads the data from the memory through DMA, adds timing control signals simulating image sensor behavior, and then sends the data to the ISP for processing. According to the processing characteristics of image data in these two operating modes, the ISP in the on-line mode has higher requirements for real-time performance and data integrity. In the on-line mode, image sensor data are continuously input to the ISP for processing at a certain frame rate. If a frame loss occurs, subsequent frames in the on-line mode will have already entered the processing pipeline in sequence, making it difficult to pause the entire process to recover lost data frames as in off-line processing. Therefore, in addition to determining the processing flow of data frames and test frames based on process handling instructions, the present disclosure further detects whether conflicts occur between data frames and test frames during the execution of logic built-in self-test in the on-line mode based on conflict handling instructions, and gives priority to ensuring the real-time processing and data integrity of data frames when conflicts occur.

Specifically, when the logic built-in self-test is executed in the on-line state, the conflict handling instruction comprises: detecting whether the signal of the current test frame and the signal of the current data frame are both valid; if they are both valid, determining that a conflict occurs between the current test frame and the current data frame, and generating a frame conflict signal; if they are not both valid, determining that no conflict occurs between the current test frame and the current data frame, and continuing to determine the processing flow of the current test frame and the current data frame based on the process handling instruction.

In some embodiments, detecting whether the signal of the current test frame and the signal of the current data frame are both valid is actually to determine whether the signal of the current test frame and the signal of the current data frame are both high level. If both are high level, it means that the current data frame and the current test frame are both valid; otherwise, if they are not both high level, the current data frame and the current test frame are not both valid. Further, when the current data frame or the current test frame enters the ISP, it needs to pass through different functional modules for processing. Therefore, when the signal of the current test frame and the current data frame signal of the subsequent module are both high level, it means that both the current test frame and the current data frame are being processed in the ISP, and a conflict will occur at this time, so processing is performed based on the conflict handling instruction.

Further, the conflict handling instruction also comprises: receiving the frame conflict signal to invalidate the check results of the test frames and reporting the current pass count value. In order to ensure the real-time processing and data integrity of the data frames, when a conflict occurs between the current data frame and the current test frame, the check result of the current test frame is invalidated, and the current pass count value is reported, so that the subsequent self-test process or data processing can be continued.

It should be noted that in other embodiments, the conflict handling instruction comprises: receiving the frame conflict signal to invalidate the check value of the current test frame and reporting the current pass count value.

Specifically, in the on-line mode, when in the on-line power-on test state, if the frame conflict signal is generated, the logic built-in self-test is ended, and the data frames are continuously processed.

Specifically, in the on-line mode, when in the on-line working state, if the frame conflict signal is generated, a frame conflict interrupt signal is triggered; in response to the frame conflict interrupt signal, the logic built-in self-test is suspended, and the next data frame is obtained for processing; and a next test frame is inserted in a vertical blanking period after completion of processing of the next data frame to obtain a corresponding check result, and determining whether the frame conflict signal is generated.

That is, when the chip is in the power-on test state or working state of the online mode, data frames may still be received during execution of logic built-in self-test, thereby causing conflicts between data frames and test frames. At this time, through the conflict handling instruction set in the present disclosure, the real-time performance and integrity of data frame processing can be effectively ensured, and in the on-line working state, a frame conflict interrupt signal can be triggered to suspend the execution of the logic built-in self-test, thereby avoiding impact on normal operation of the chip.

The following takes an automotive-grade ISP image signal processor chip as an example to illustrate the specific process of the ISP executing the logic built-in self-test in the power-on test state and working state in the off-line mode and on-line mode respectively.

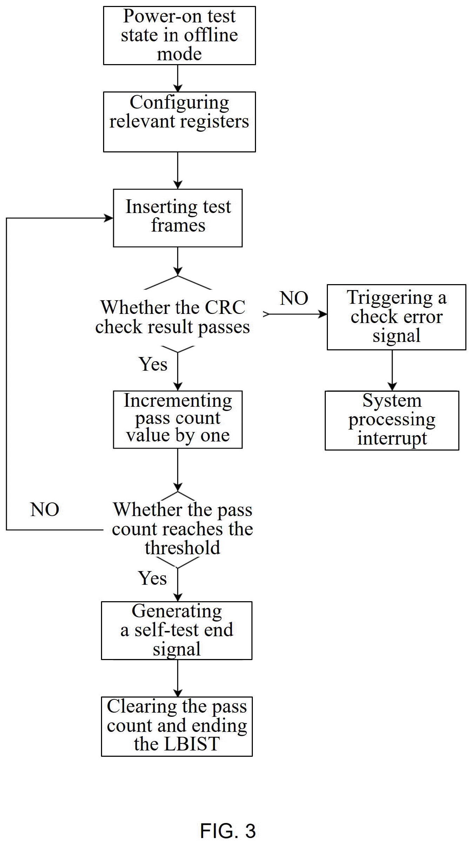

FIG.3 is a schematic flowchart showing execution of the logic built-in self-test by an ISP chip in an off-line power-on test state according to an embodiment of the present disclosure. As shown in FIG.3, after configuring relevant registers, test frames are inserted according to the configured resolution and parameters of the test frames, and CRC check is performed on the test frames to obtain check results. If the check result is failed, a check error signal is triggered, and the processing is interrupted in response to the check error signal. If the current test frame passes the check, the pass count value is increased by one, and it is determined whether the pass count value satisfies the threshold condition. When the pass count value satisfies the threshold condition, a self-test end signal is generated to end the logic built-in self-test, and the pass count value is reset to zero. When the pass count value does not satisfy the threshold condition, the self-test end signal is not generated, and a next test frame is continuously inserted to obtain the check result. In fact, since the ISP exchanges data through DDR storage in the off-line mode, during the power-on test state of the off-line mode, after all test frames are executed and the pass count value satisfies the threshold condition, a self-test end signal is generated. After the CPU hardware completes the response to the self-test end signal, the logic built-in self-test is ended, and the ISP enters the working state to process the data frames in the DDR.

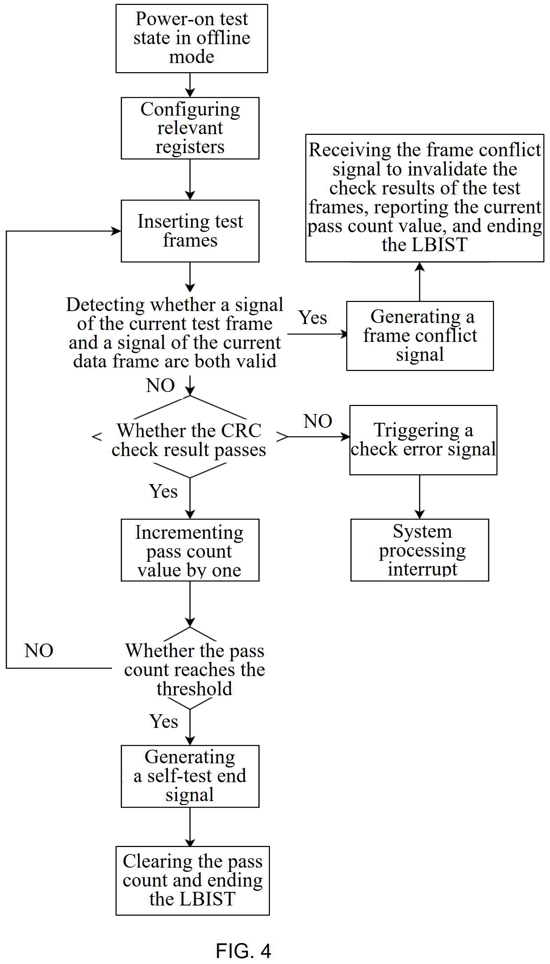

FIG.4 is a schematic flowchart showing execution of the logic built-in self-test by an ISP chip in an on-line power-on test state according to an embodiment of the present disclosure. As shown in FIG.4, after configuring relevant registers, test frames are inserted according to the configured resolution and parameters of the test frames, and CRC check is performed on the test frames. In fact, since the data generated by the image sensor and the image data processed by the ISP are independent of each other, in the on-line mode, the data generated by the image sensor may be sent to the ISP for processing during the ISP power-on test, and at this time, a frame data transmission conflict may occur between the current test frame and the current data frame. Therefore, compared with the above power-on test state in the off-line mode, when the ISP executes the logic built-in self-test in the online power-on test state, the present disclosure further detects and handles possible conflicts between data frames and test frames through conflict handling instructions. When obtaining the check result, it is also necessary to detect whether the signals of the current test frame and the current data frame are both valid. If they are both valid, it is determined that a conflict occurs and a frame conflict signal is generated. At this time, in response to the frame conflict signal, the check result of the current test frame is invalidated, the current pass count value is reported, the logic built-in self-test is ended, and the ISP continues to process the data frames. When the signals are not both valid, the check process is continued. That is, if the current test frame passes the check, the pass count value is increased by one, and it is determined whether the pass count value satisfies the threshold condition. When the pass count value satisfies the threshold condition, a self-test end signal is generated to end the logic built-in self-test, and the pass count value is reset to zero. When the pass count value does not satisfy the threshold condition, the self-test end signal is not generated, and the test frames are continuously inserted to obtain the check results. In addition, if the test frame fails to pass the check, a check error signal is triggered, and the processing is interrupted in response to the check error signal.

It should be noted that in other embodiments, possible conflicts between data frames and test frames can be detected and handled based on conflict handling instructions after obtaining the check value of the current test frame. That is, when it is detected that the signals of the current test frame and the current data frame are both valid, the check value of the test frame is invalidated. For example, after verifying the current test frame by using the CRC-32 generating polynomial 0x04C11DB7 to obtain the check value of the current test frame, it is detected whether the signals of the current test frame and the current data frame are both valid. If they are both valid, it is determined that a conflict occurs and a frame conflict signal is generated. In other words, in fact, the conflict handling instruction of the present disclosure can invalidate the result generated by verifying the current test frame when a conflict occurs between the current data frame and the current test frame, regardless of the form of the result, which should be within the protection scope of the present disclosure.

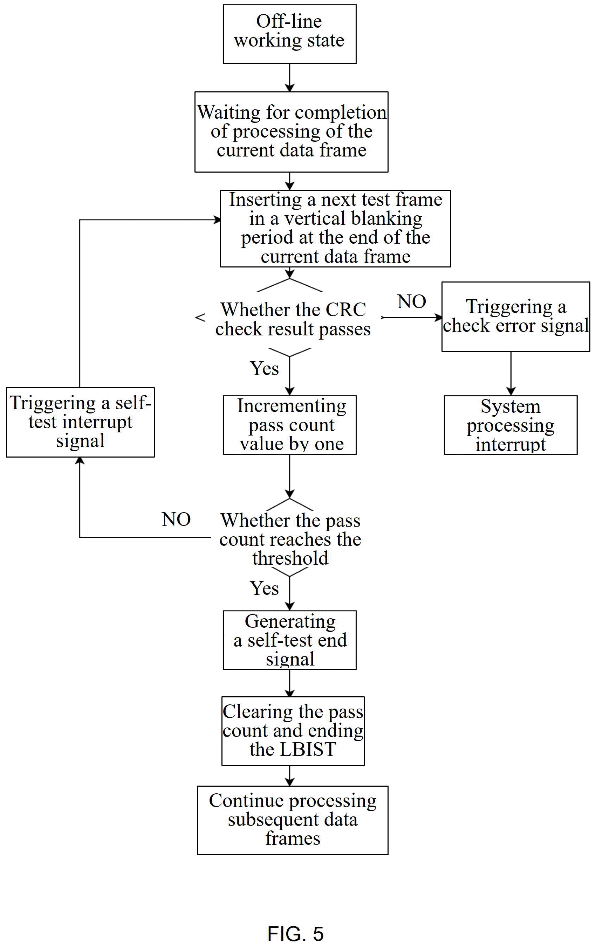

FIG.5 is a schematic flowchart showing execution of the logic built-in self-test by an ISP chip in an off-line working state according to an embodiment of the present disclosure. After the power-on test of the chip is completed, the ISP will actually enter the working state. As described above, in the ISP off-line mode, data are obtained from and stored in DDR. Therefore, when logic built-in self-test is carried out in the working state of the off-line mode, each current test frame is executed during a V-blank period after processing of a current data frame is completed. If the current test frame fails to pass the check, a check error signal is triggered, and the processing is interrupted in response to the check error signal. If the current test frame passes the check, the pass count value is increased by one, and it is determined whether the pass count value satisfies the threshold condition. When the pass count value satisfies the threshold condition, a self-test end signal is generated to end the logic built-in self-test, and the pass count value is reset to zero. When the pass count value does not satisfy the threshold condition, the self-test end signal is not generated. At this time, a self-test interrupt signal is triggered. In response to the self-test interrupt signal, the logic built-in self-test is suspended, and the next data frame is obtained for processing; a next test frame is inserted in a vertical blanking period after completion of processing of the next data frame to obtain a corresponding check result. In this way, the self-test end signal or self-test interrupt signal generated after testing of each test frame can effectively avoid the conflict problem between data frames and test frames in the working state of the offline mode.

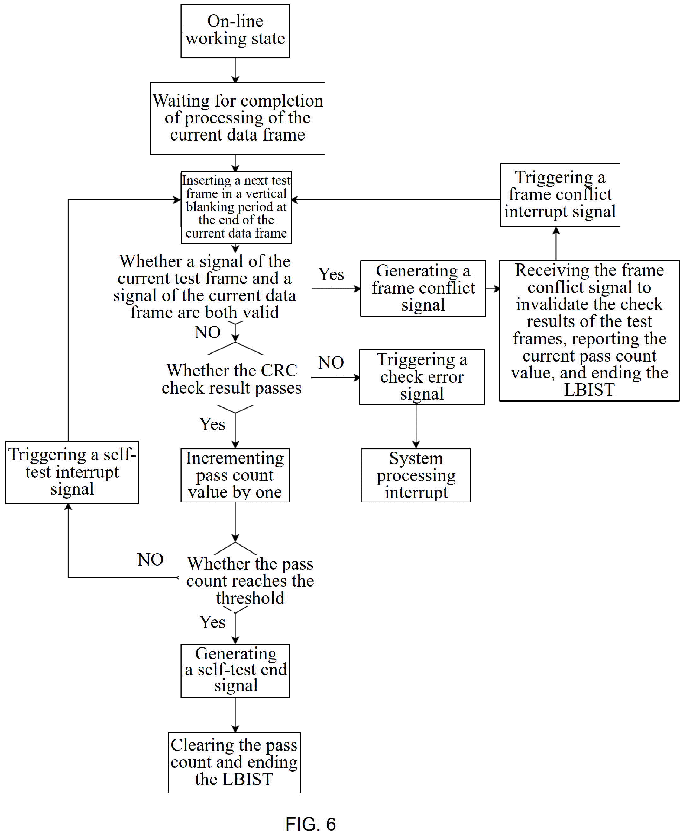

FIG.6 is a schematic flowchart showing execution of the logic built-in self-test by an ISP chip in an on-line working state according to an embodiment of the present disclosure. As shown in FIG.6, when the ISP chip operates in the on-line working mode, image processing functional modules in the ISP pipeline are processing data frames. When the processing of a current data frame is completed, a current test frame is inserted during the V-blank period. During this process, test frame data are generated according to a configured resolution and parameters of the test frames, and input data of a module under test on the ISP pipeline are switched to the test frame data. After the current test frame is inserted, a corresponding check result is obtained. In addition, when obtaining the check result, it is also necessary to detect whether the signals of the current test frame and the current data frame are both valid, so as to determine whether a conflict occurs between the current test frame and the current data frame. When a data conflict occurs between the current test frame and the current data frame, a frame conflict signal is generated, so that the CRC check result of the current test frame becomes invalid, and the current pass count value is reported. A frame conflict interrupt signal is also triggered. The system determines that a frame conflict occurs in the chip during the working state according to a current ISP working state and the frame conflict signal. In order to complete execution of all test frames during the chip working period, logic built-in self-test is suspended in response to the frame conflict interrupt signal, and a next data frame is obtained. Thereafter, after waiting for the ISP to complete processing of the next data frame, a next test frame is inserted during a V-blank period at the end of the current data frame.

When the signals of the current test frame and the current data frame are not both valid, it means that no conflict with the current data frame occurs during the test of the current test frame, and the check process is continued. That is, after the last module of each section of the data path completes the check of the test frame, the calculated check value of the entire frame of test frame is compared with the pre-stored check reference value. If the comparison result values are different, it means that the check is failed. At this time, a check error signal is generated, and the processing is interrupted in response to the check error signal. If the check is passed, the pass count value is increased by one, and it is determined whether the pass count value satisfies the threshold condition. When the pass count value satisfies the threshold condition, a self-test end signal is generated to end the logic built-in self-test, and the pass count value is reset to zero. At this time, each module of the ISP pipeline continues to process subsequent image frame data. When the pass count value does not satisfy the threshold condition, the self-test end signal is not generated. At this time, a self-test interrupt signal is triggered. In response to the self-test interrupt signal, the logic built-in self-test is suspended, and the next data frame is obtained for processing. Thereafter, the next test frame is inserted in the V-blank period after the processing of the next data frame is completed to obtain the corresponding check result.

It should be noted that in other embodiments, possible conflicts between data frames and test frames can be detected and handled based on conflict handling instructions after obtaining the check value of the current test frame. That is, when it is detected that the signals of the current test frame and the current data frame are both valid, the check value of the current test frame is invalidated. For example, after verifying a current test frame by using the CRC-32 generating polynomial 0x04C11DB7 to obtain the check value, it is detected whether the signals of the current test frame and the current data frame are both valid. If they are both valid, it is determined that a conflict occurs and a frame conflict signal is generated. In other words, in fact, the conflict handling instruction of the present disclosure can invalidate a result generated by verifying the current test frame when a conflict occurs between the current data frame and the current test frame, regardless of the form of the result, which should be within the protection scope of the present disclosure.

In summary, the conflict handling method for logic built-in self-test provided by the embodiments of the present disclosure can be applied to the chip executing the logic built-in self-test in the power-on test state and working state in the off-line mode and on-line mode respectively. The present disclosure can effectively handle possible data conflicts in the on-line mode through the conflict handling process, give priority to ensuring the real-time performance and data integrity of the chip processing real data, and prevent the check result of the conflict between the current test frame and the current data frame from affecting the processing of real image frame data. In addition, the present disclosure can meet a variety of complex data paths through process handling instructions, determine the processing flow of test frames and data frames, and avoid data conflicts when executing logic built-in self-test in various situations.

Further, in the scenarios where automotive-grade chips have high real-time requirements for image processing, a sensor continuously converts optical signals into electrical image signals and transmits the electrical image signals to an ISP for processing. In this process, with the help of the present disclosure, real-time processing and data integrity of image frame data can be preferentially ensured, and an impact of frame conflicts during logic built-in self-test on normal operation of an in-vehicle system can be effectively controlled and maintained at a low level, thereby preventing interruptions caused by CRC check errors resulting from processing of invalid test frame conflicts by the system, and avoiding adverse effects on driving safety and riding experience of passengers in a vehicle.

It should be noted that the present disclosure is also applicable to conflict handling in logic built-in self-test of other chips or systems, and is not limited to specific test stimulus generation circuits, BIST random test images or CRC check methods.

The protection scope of the conflict handling method for logic built-in self-test described in the present disclosure is not limited to the execution order of the steps listed in the present disclosure. All schemes realized by ncreasing or decreasing steps of the prior art or replacing steps according to the principles of the present disclosure shall fall within the protection scope of the present disclosure.

The present disclosure also provides a conflict handling apparatus for logic built-in self-test. The conflict handling apparatus for logic built-in self-test can implement the conflict handling method for logic built-in self-test described in the present disclosure, but implementation devices of the conflict handling method are not limited to structures of the conflict handling apparatus listed in the embodiments. All structural modifications and substitutions of related art made according to principles of the present disclosure shall fall within the protection scope of the present disclosure.

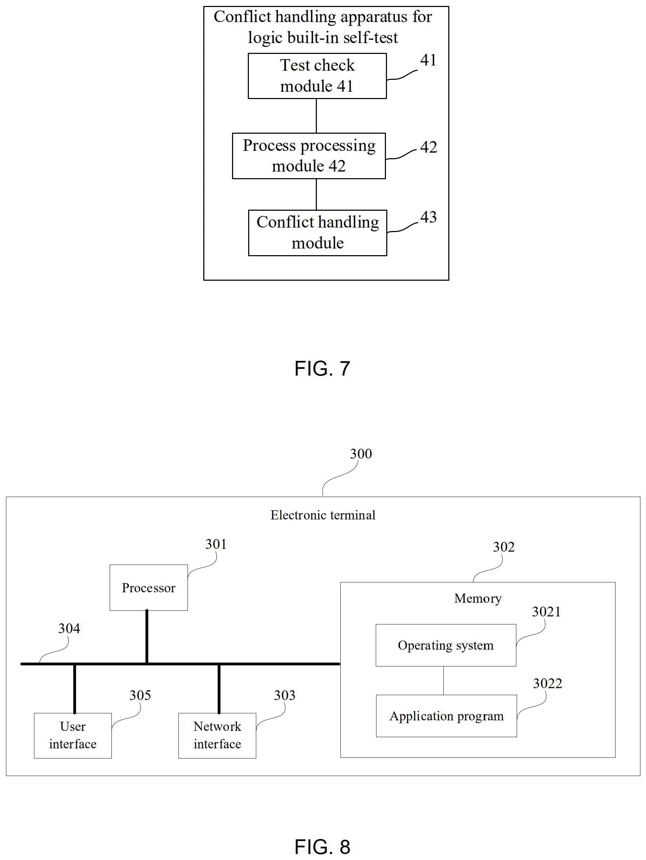

As shown in FIG.7, the present disclosure provides a conflict handling apparatus for logic built-in self-test, including a test check module 41, a process handling module 42 and a conflict handling module 43.

The test check module 41 is configured to obtain check results of test frames to perform a logic built-in self-test;
the process handling module 42 is configured to determine a processing flow of the test frames and data frames based on a process handling instruction when the logic built-in self-test is performed; and
the conflict handling module 43 is configured to detect whether a conflict occurs between a current test frame and a current data frame based on a conflict handling instruction, and perform conflict handling when a conflict arises between the current test frame and the current data frame.

It should be noted that the functions or operations of the test check module 41, the process handling module 42 and the conflict handling module 43 described in this embodiment of the present disclosure correspond one-to-one to steps in the conflict handling method for logic built-in self-test in the above embodiments, and thus are not repeated herein.

It should also be understood that the division of modules in this embodiment of the present disclosure is schematic and merely represents logical function division, and other division manners may be adopted in actual implementation. In addition, functional modules in each embodiment of the present disclosure may be integrated into one processor, may exist separately as physical entities, or two or more modules may be integrated into one module. The above integrated modules can be implemented in the form of hardware or in the form of software functional modules.

FIG.8 is a schematic structural diagram showing an electronic device according to an embodiment of the present disclosure. As shown in FIG.8, the electronic terminal comprises at least one processor 301, a memory 302, at least one network interface 303 and a user interface 305. The components in the device are coupled together via a bus system 304. The bus system 304 is used to enable connection and communication between these components. The bus system 304 comprises a power bus, a control bus, a status signal bus, and a data bus. However, for clarity of illustration, the various buses are labeled as the bus system 304 in FIG. 8.

The user interface 305 may comprise a display, a keyboard, a mouse, a trackball, a click gun, keys, buttons, a tactile pad, or a touch screen.

The memory 302 may be volatile memory or non-volatile memory, or may comprise both volatile and non-volatile memory. The non-volatile memory may be read-only memory (ROM), programmable read-only memory (PROM), which is used as an external cache. Many forms of RAM are applicable, such as static random-access memory (SRAM), synchronous static random-access memory (SSRAM). The memory described herein is intended to comprise, but is not limited to, these and any other suitable types of memory.

The memory 302 in this embodiment of the present disclosure is configured to store various types of data to support the operation of the electronic terminal 300. Examples of these data comprise any executable program operated on the electronic terminal 300, such as an operating system 3021 and an application program 3022; the operating system 3021 comprises various system programs, such as a framework layer, a core library layer, a driver layer, etc., for implementing various basic services and processing hardware-based tasks. The application programs 3022 may comprise various applications, such as a media player, a browser, etc., for various business scenarios. The conflict handling method for logic built-in self-test provided by this embodiment of the present disclosure may be included in the application program 3022.

The method disclosed in the present disclosure may be applied to the processor 301 or implemented by the processor 301. The processor 301 may be an integrated circuit chip with signal processing capabilities. In the implementation process, each step of the above method may be completed by an integrated logic circuit of hardware in the processor 301 or an instruction in a form of software. The processor 301 may be a general-purpose processor, a digital signal processor (DSP), or other programmable logic devices, discrete gates or transistor logic devices, discrete hardware components, etc. The processor 301 may implement or perform the various methods, steps, and logic block diagrams disclosed in the present application. The general-purpose processor 301 may be a microprocessor or any conventional processor. The method of the present application may be directly performed by a hardware decoding processor, or performed by a combination of hardware and software modules in a decoding processor. The software modules may be located in a storage medium, which is located in a memory. The processor reads information from the memory and implements the steps of the method in combination with its hardware.

In an exemplary embodiment, the electronic terminal 300 may be implemented by one or more Application Specific Integrated Circuits (ASICs), Digital Signal Processors (DSPs), Programmable Logic Devices (PLDs), and/or Complex Programmable Logic Devices (CPLDs) for executing the foregoing methods.

According to the method provided by the present disclosure, the present disclosure further provides a computer program product, which comprises computer program code. When the computer program code is executed on a computer, the computer is caused to perform the conflict handling method for logic built-in self-test in any one of the foregoing embodiments.

According to the method provided by the present disclosure, the present disclosure further provides a computer-readable storage medium storing program code. When the program code is executed on a computer, the computer is caused to perform the conflict handling method for logic built-in self-test in any one of the foregoing embodiments.

The terms "component", "module", and "system" used in this specification refer to computer-related entities, which may be hardware, firmware, a combination of hardware and software, software, or software in execution. For example, a component may be, but is not limited to, a process running on a processor, a processor, an object, an executable file, an execution thread, a program, and/or a computer. By way of illustration, both an application running on a computing device and the computing device itself may be components. One or more components may reside in a process and/or an execution thread, and a component may be located on one computer and/or distributed between two or more computers. In addition, these components may execute from various computer-readable media having various data structures stored thereon. Components may communicate via local and/or remote processes based on signals including one or more data packets, for example, data transmitted between two components interacting with each other in a local system, a distributed system, and/or across a network such as the Internet.

Those of ordinary skill in the art will appreciate that the various illustrative logical blocks and steps described in conjunction with the embodiments disclosed herein may be implemented by electronic hardware, or by a combination of computer software and electronic hardware. Whether these functions are executed in hardware or software depends on the specific application and design constraints of the technical solution. Professionals can use different methods to implement the described functions for each specific application, and such implementations should not be considered beyond the scope of the present disclosure.

Those skilled in the art will appreciate that, for the sake of convenience and brevity, the specific operating processes of the systems, apparatuses, and units described above may be understood with reference to the corresponding processes in the foregoing method embodiments, and therefore will not be described in detail herein.

It should be understood that the system, apparatus, or method disclosed in the present disclosure can be implemented in alternative ways. For example, the apparatus embodiments described above are merely illustrative. For instance, the division of units is just a logical functional division, and there may be other ways of division in actual implementation. For example, multiple modules or units can be combined or integrated into another system, or some features can be ignored or not executed. Furthermore, the coupling or direct coupling or communicative connection between two elements can be through some interfaces, the indirect coupling or communicative connection between apparatuses or modules or units can be electrical, mechanical, or in other forms.

The units described herein as separate components can be physically separate or not, and the components shown as units can be physical modules or not, that is, they can be located in one place, or they can be distributed on multiple networked units. Some or all of the units may be selected according to actual needs to achieve the purpose of the present disclosure.

For instance, for each functional unit of the present disclosure, it can be integrated into a processing module, or each module/unit can physically exist independently, or two or more units can be integrated into one module/unit.

In the above embodiments, all or part of the functions of each functional unit may be implemented by software, hardware, firmware, or any combination thereof. When implemented by software, all or part of the functions may be implemented in the form of a computer program product. A computer program product comprises one or more computer instructions (programs). When the computer program instructions (programs) are loaded and executed on a computer, the processes or functions according to the embodiments of the present disclosure are performed in whole or in part. The computer may be a general-purpose computer, a specialpurpose computer, a computer network, or other programmable devices. The computer program instructions may be stored in a computer-readable storage medium or transmitted from one computer-readable storage medium to another computer-readable storage medium. For example, the computer program instructions may be transmitted from one website, computer, server, or data center to another website, computer, server, or data center via wired means (such as coaxial cable, optical fiber, or Digital Subscriber Line (DSL)) or wireless means (such as infrared, radio, or microwave). The computer-readable storage medium may be any available medium that can be accessed by a computer, or a data storage device such as a server or data center integrated with one or more available media. The available media may comprise magnetic media (e.g., floppy disks, hard disks, and magnetic tapes), optical media (e.g., Digital Versatile Discs (DVDs)), or semiconductor media (e.g., solid-state disks (SSDs)).

The functions may be stored in the computer readable storage medium if implemented as software functional units and sold or used as standalone products. It is understood that the technical solution of the present disclosure, or the part of the technical solution that improves upon the prior art, may be embodied in the form of a software product that is stored in a storage medium and comprises a number of instructions to cause a computer (which may be a personal computer, a server, or a network device, etc.) to perform all or some of the steps of a method described in various embodiments of the present disclosure. The aforementioned storage medium comprises: a USB flash drive, a portable hard disk, a Read-Only Memory (ROM), a Random Access Memory (RAM), a magnetic disk, an optical disk, and various other media capable of storing program code.

The foregoing descriptions are merely specific embodiments of the present disclosure, and are not intended to limit the protection scope of the present disclosure. Any modifications or substitutions that can be readily conceived by a person skilled in the art within the technical scope disclosed in the present disclosure shall fall within the protection scope of the present disclosure. Therefore, the protection scope of the present disclosure shall be determined by the claims.

The descriptions of the processes or structures corresponding to the various figures may emphasize different aspects. Parts not detailed in a particular process or structure can be referenced in the descriptions of other relevant processes or structures.

The above-mentioned embodiments are merely illustrative of the principle and effects of the present disclosure instead of restricting the scope of the present disclosure. Any person skilled in the art may modify or change the above embodiments without violating the principle of the present disclosure. Therefore, all equivalent modifications or changes made by those who have common knowledge in the art without departing from the spirit and technical concept disclosed by the present disclosure shall be still covered by the claims of the present disclosure.

## Claims

1. A conflict handling method for logic built-in self-test, comprising:
obtaining check results of test frames to perform a logic built-in self-test;
when the logic built-in self-test is performed, determining a processing flow of the test frames and data frames based on a process handling instruction; and
detecting whether a conflict occurs between a current test frame and a current data frame based on a conflict handling instruction, and performing conflict handling when a conflict occurs between the current test frame and the current data frame.

2. The conflict handling method for logic built-in self-test according to claim 1, wherein when the logic built-in self-test is performed in an on-line mode, the conflict handling instruction comprises:
detecting whether a signal of the current test frame and a signal of the current data frame are both valid; when the signal of the current test frame and the signal of the current data frame are both valid, determining that a conflict occurs between the current test frame and the current data frame, and generating a frame conflict signal; and
when the signal of the current test frame and the signal of the current data frame are not both valid, determining that no conflict occurs between the current test frame and the current data frame, and continuing to determine the processing flow of the test frames and the data frames based on the process handling instruction.

3. The conflict handling method for logic built-in self-test according to claim 2, wherein the conflict handling instruction comprises:
receiving the frame conflict signal to invalidate the check result of the current test frame and reporting a current pass count value; wherein the pass count value is a count value of the test frames that have passed the check.

4. The conflict handling method for logic built-in self-test according to claim 2, wherein when the frame conflict signal is generated in an on-line power-on test state, the logic built-in self-test is terminated.

5. The conflict handling method for logic built-in self-test according to claim 2, further comprising: when the frame conflict signal is generated in an on-line working state, triggering a frame conflict interrupt signal;
suspending the logic built-in self-test in response to the frame conflict interrupt signal and acquiring a next data frame for processing; and
inserting a next test frame in a vertical blanking period after completion of processing of the next data frame to obtain a corresponding check result, and determining whether the frame conflict signal is generated.

6. The conflict handling method for logic built-in self-test according to claim 1, wherein when the logic built-in self-test is performed in an on-line mode or an off-line mode, the process handling instruction comprises:
determining whether a self-test end signal is generated based on the check results of the test frames;
wherein when the self-test end signal is generated, terminating the logic built-in self-test and acquiring the data frames for data processing; and
wherein when the self-test end signal is not generated, continuing to obtain check results of additional test frames to perform the logic built-in self-test.

7. The conflict handling method for logic built-in self-test according to claim 6, wherein determining whether the self-test end signal is generated based on the check results of the test frames comprises:
obtaining a pass count value, wherein the pass count value is a count value of the test frames that have passed the check; and
determining whether the pass count value satisfies a threshold condition; when the pass count value satisfies the threshold condition, generating the self-test end signal;
wherein when the pass count value does not satisfy the threshold condition, not generating the self-test end signal, and continuing to obtain the check results of the additional test frames until the pass count value satisfies the threshold condition.

8. The conflict handling method for logic built-in self-test according to claim 6, wherein when the self-test end signal is not generated in an on-line working state or an off-line working state, triggering a self-test interrupt signal;
suspending the logic built-in self-test in response to the self-test interrupt signal and acquiring a next data frame for processing; and
inserting a next test frame in a vertical blanking period after completion of processing of the next data frame to obtain a corresponding check result.

9. The conflict handling method for logic built-in self-test according to claim 6, wherein when the self-test end signal is not generated in an on-line power-on test state or an off-line power-on test state, directly acquiring a next test frame to obtain a corresponding check result.

10. The conflict handling method for logic built-in self-test according to claim 1, comprising:
wherein when a check result of the current test frame is passed, incrementing the pass count value by one; if the current test frame fails check, generating a check error signal; and
stopping the logic built-in self-test and data processing of the current data frame in response to the check error signal.

11. The conflict handling method for logic built-in self-test according to claim 1, wherein obtaining the check results of the test frames comprises:
verifying each of the test frames by using a CRC-32 generating polynomial 0x04C11DB7 to obtain a check value; and
comparing the check value with a pre-stored check reference value to obtain the check result.

12. The conflict handling method for logic built-in self-test according to claim 11, wherein obtaining the check results of the test frames comprises:
wherein when the check value is identical to the check reference value, obtained check result is passed; and
wherein when the check value is different from the check reference value, the obtained check result is failed.

13. A conflict handling apparatus for logic built-in self-test, comprising:
a test check module configured to obtain check results of test frames to perform a logic built-in self-test;
a process handling module configured to determine a processing flow of the test frames and data frames based on a process handling instruction when the logic built-in self-test is performed; and
a conflict handling module configured to detect whether a conflict occurs between a current test frame and a current data frame based on a conflict handling instruction, and perform conflict handling when a conflict arises between the current test frame and the current data frame.

14. An electronic device, comprising a memory and a processor;
wherein the memory is configured to store a computer program; and
wherein the processor is configured to execute the computer program stored in the memory, so as to cause the electronic device to perform the conflict handling method for logic built-in self-test according to any one of claims 1 to 12.

15. A computer-readable storage medium having a computer program stored thereon, wherein when the program is executed by an electronic device, the conflict handling method for logic built-in self-test according to any one of claims 1 to 12 is implemented.

16. A computer program product comprising computer program code, wherein when the computer program code is executed on a computer, the computer is enabled to implement the conflict handling method for logic built-in self-test according to any one of claims 1 to 12.
